(19) Europäisches Patentamt / European Patent Office / Office européen des brevets

(11) **EP 3 268 713 B1**

(12) **EUROPÄISCHE PATENTSCHRIFT**

(45) Veröffentlichungstag und Bekanntmachung des Hinweises auf die Patenterteilung:
**15.01.2020 Patentblatt 2020/03**

(21) Anmeldenummer: **16710416.5**

(22) Anmeldetag: **11.03.2016**

(51) Int Cl.:
*F02D 41/24* (2006.01)     *G06Q 10/04* (2012.01)
*G06Q 10/06* (2012.01)     *F02D 41/14* (2006.01)

(86) Internationale Anmeldenummer:
**PCT/EP2016/055307**

(87) Internationale Veröffentlichungsnummer:
**WO 2016/146528 (22.09.2016 Gazette 2016/38)**

(54) **VERFAHREN ZUM ERSTELLEN EINES MODELL-ENSEMBLES ZUR KALIBRIERUNG EINES STEUERGERÄTES**

METHOD FOR GENERATING A MODEL ENSEMBLE FOR CALIBRATING A CONTROL DEVICE

PROCÉDÉ DE RÉALISATION D'UN ENSEMBLE DE MODÈLES PERMETTANT D'ÉTALONNER UN APPAREIL DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.03.2015 AT 502022015**

(43) Veröffentlichungstag der Anmeldung:
**17.01.2018 Patentblatt 2018/03**

(73) Patentinhaber: **AVL List GmbH**
**8020 Graz (AT)**

(72) Erfinder:
• **SULJANOVIC, Amra**
  **8052 Graz (AT)**
• **KÖGELER, Hans-Michael**
  **8010 Graz (AT)**
• **JAKUBEK, Stefan**
  **1230 Wien (AT)**
• **DIDCOCK, Nico**
  **8020 Graz (AT)**

(74) Vertreter: **Patentanwälte Pinter & Weiss OG**
**Prinz-Eugen-Straße 70**
**1040 Wien (AT)**

(56) Entgegenhaltungen:
**US-A1- 2005 203 725**

• **Christoph Hametner ET AL: "Nonlinear System Identiication through Local Model Approaches: Partitioning Strategies and Parameter Estimation 179 0 Nonlinear System Identification through Local Model Approaches: Partitioning Strategies and Parameter Estimation", , 1. Januar 2010 (2010-01-01), XP055280761, Gefunden im Internet: URL:http://cdn.intechopen.com/pdfs-wm/1173 9.pdf [gefunden am 2016-06-15]**
• **Vom Fachbereich: "Emission Modelling and Model-Based Optimisation of the Engine Control", , 25. Februar 2013 (2013-02-25), XP055281312, Gefunden im Internet: URL:http://tuprints.ulb.tu-darmstadt.de/39 48/1/Emission Modelling and Model-Based Optimisation of the Engine Control - Dissertation Heiko Sequenz.pdf [gefunden am 2016-06-16]**
• **Knut - Andreas Lie: "Finite-Element Methods and Numerical Linear Algebra", , 1. Januar 2005 (2005-01-01), XP055281329, Gefunden im Internet: URL:http://www.uio.no/studier/emner/matnat /ifi/INF2340/v05/foiler/sim06.pdf [gefunden am 2016-06-16]**
• **CHRISTOPH HAMETNER CHRISTIAN MAYR STEFAN JAKUBEK: "Dynamic NOx emission modelling using local model networks", INTERNATIONAL JOURNAL OF ENGINE RESEARCH, PROFESSIONAL ENGINEERING PUBLISHING, GB, Bd. 15, 1. Dezember 2014 (2014-12-01), Seiten 928-933, XP009190553, ISSN: 1468-0874**

**Beschreibung**

Die gegenständliche Erfindung betrifft ein Verfahren zum Schätzen zumindest einer Ausgangsgröße eines physikalischen Prozesses in Abhängigkeit von zumindest einer Eingangsgröße mit einem Modell-Ensemble, wobei das Modell-Ensemble aus einer Summe der jeweils mit einem Wichtungsfaktor gewichteten Modell-Ausgangsgrößen einer Mehrzahl von Modellen gebildet wird.

Bei der Entwicklung von Verbrennungsmotoren sind gesetzliche Vorgaben hinsichtlich der Emissionen, insbesondere von NOx, Ruß, CO, $CO_2$, etc., und hinsichtlich des Verbrauchs zu berücksichtigen. Ein Steuergerät eines Verbrennungsmotors wird hierzu während der Entwicklung so kalibriert, dass diese Vorgaben im Betrieb des Verbrennungsmotors eingehalten werden. Kalibrieren bedeutet hierbei, dass gewisse Steuerparameter des Verbrennungsmotors, wie beispielsweise das Luft/Kraftstoff-Verhältnis, die Rückführung von Abgas in den Zylinder, Zündzeitpunkte, etc., in Abhängigkeit eines bestimmten Zustandes des Verbrennungsmotors, wie beispielsweise Drehmoment, Drehzahl, Kühlwasser-Temperatur, etc., vorgegeben werden. Dazu werden im Steuergerät beispielsweise entsprechende Kennfelder hinterlegt, die im Betrieb des Verbrennungsmotors ausgelesen werden, um die Steuerparameter für einen bestimmten Zustand zu ermitteln. Aufgrund der vielen Einflussgrößen ist das Kalibrieren ein sehr zeitaufwendiger und kostspieliger Vorgang, der bisher hauptsächlich auf speziellen Prüfständen durchgeführt wurde. Dazu wurde der Verbrennungsmotor auf einem Prüfstand aufgebaut und mit einer Belastungsmaschine, die bestimmte vorgegebene Lastzustände simuliert, verbunden. In der Regel werden dabei am Prüfstand vorgegebene Belastungszyklen (Fahrzyklen) abgefahren. Während der Belastungszyklen werden die Emissionswerte und/oder der Verbrauch des Verbrennungsmotors in Abhängigkeit des jeweils aktuellen Zustandes messtechnisch erfasst. Nach der Auswertung der erfassten Messwerte werden die Steuerparameter im Steuergerät verändert und der Vorgang wiederholt, bis eine zufriedenstellende Kalibrierung erreicht wurde. Ein Beispiel für eine solche Kalibrierung kann der Dissertation von Sequenz H., "Emission Modelling and Model-Based Optimisation of Engine Control", Technische Universität Darmstadt, Oktober 2012 entnommen werden. Darin werden auch verschiedene Modellstrukturen zur Modellierung diskutiert. Die Zeit am Prüfstand ist allerdings sehr teuer und soll so weit wie möglich reduziert werden.

Daher wurden bereits Methoden entwickelt, um die Kalibrierung zu vereinfachen, insbesondere um Prüfstandzeiten einzusparen. Diese Methoden basieren oftmals auf Modellen des Emissions- oder Verbrauchsverhaltens des Verbrennungsmotors, oder allgemein auf Modellen eines physikalischen Prozesses. Hier gilt es also, ausreichend genaue Modelle des physikalischen Prozesses zu bestimmen, die dann für eine Kalibierierung des Steuergerätes verwendet werden können. Dazu wurden bereits Verfahren zur automatisierten Modellidentifikation von nichtlinearen Prozessen (z.B. der NOx-Emission oder des Verbrauchs) bekannt, wie z.B. in der WO 2013/131836 A2 beschrieben. Diese Verfahren basieren jeweils auf einer vorgegebenen Modellstruktur, wie beispielswiese einem neuronalen Netzwerk, einem Kriging Modell oder einem linearen Modellnetzwerk. Die gewählte Modellstruktur gibt dabei Modellparameter vor, die durch die Verfahren zur automatisierten Modellidentifikation bestimmt werden. Hierzu werden Daten in Form von Messwerten auf einem Prüfstand erfasst und das Modell wird anhand dieser Daten parametrisiert bzw. trainiert. Dabei ist folglich nur mehr eine geringe Anzahl von Prüfläufen mit einem realen Verbrennungsmotor auf einem realen Prüfstand notwendig. Mit dem trainierten Modell konnte dann der Einfluss bestimmter Steuerparameter auf die Emission oder den Verbrauch ohne die Notwendigkeit von weiteren Prüfstandversuchen untersucht werden.

Die Dissertation von Hartmann B., "Lokale Modellnetze zur Identifikation und Versuchsplanung nichtlinearer Systeme", Universität Siegen, Januar 2014 geht eingehend auf lineare Modellnetzwerke als Modellstruktur ein. Lineare Modellnetzwerke werden auch in Hametner C., et al., "Dynamic NOx emission modelling using local model networks", Int. Journal of Engine Research, 2014, Vol. 15(8), S.928-933 oder in Hametner C., et al., "Nonlinear System Identification through Local Model Approaches: Partitioning Strategies and Parameter Estimation", Azah Mohamed (Ed.), ISBN: 978-953-307-136-7, InTech 10.8.2010, S.179-194 beschrieben. Bei linearen Modellnetzwerken werden bekannter Weise über Teilbereiche des Eingangsgrößenbereichs gültige, lokale Modelle definiert. Der Ausgang des linearen Modellnetzes über den gesamten Eingangsgrößenbereich ergibt sich dann aus der Summe der mit Gültigkeitsfunktionen gewichteten Ausgänge der lokalen Modelle. Ein lokales Modell schätzt damit nur eine lokal gültige Ausgangsgröße, bzw. einen Teil der Ausgangsgröße des Modellnetzes.

Die Auswahl der besten Modellstruktur für die Modellierung eines bestimmten Verhaltens eines Verbrennungsmotors (z.B. der NOx-Emission) ist aber bereits anspruchsvoll und nicht unmittelbar einsichtig.

Aus diesem Grund wurden auch bereits sogenannte Modell-Ensembles herangezogen. Dabei werden verschiedene Modelle trainiert, die dann gewichtet werden, um eine bestmögliche Schätzung für ein bestimmtes Verhalten eines Verbrennungsmotors (z.B. Emission oder Verbrauch) zu erhalten. Der Ausgang des Gesamtmodells (des Modell-Ensembles) ergibt sich damit aus einer gewichteten Summe der Ausgänge der einzelnen Modelle. Für ein Modell-Ensemble müssen folglich die Wichtungsfaktoren ermittelt werden. Ein oftmals verwendetes Verfahren zur Bestimmung der Wichtungsfaktoren beruht auf dem Akaike Informationskriterium, wie in Akaike, H., "Information theory and an extension of the maximum likelihood principle", Proceedings 2nd International Symposium on Information Theory, Budapest 1973, S.267-281 beschrieben. Auch die Dissertation von Hartmann beschreibt Modellensembles mit Wichtungsfaktoren nach einem Akaike Informationskriterium.

Mit dem Akaike Informationskriterium wird die Plausibilität eines Modells $M_j$ bewertet. Dabei wird für jedes Modell $M_j$ der Modellfehler $E_j$ und die Komplexität des Modells $M_j$ in der Form

$$\mathrm{AIC}_j = \mathrm{N} \cdot \log \underbrace{\mathrm{MSE}_j}_{E_j} + 2 \cdot [\alpha] \cdot \mathrm{p}_j$$

bewertet. Mit dem Modellfehler $E_j$ wird die Abweichung der

Modell-Ausgangsgröße $\hat{y}_j$ des Models $M_j$ von der tatsächlich gemessenen Ausgangsgröße y des Prozesses bewertet. Im Akaike Informationskriterium AIC wird als Modellfehler $E_j$ der mittlere quadratische Fehler $\mathrm{MSE}_j$ des Modells $M_j$ an N verschiedenen, bekannten Eingangsgrößen u des Modells $M_j$ verwendet. Der mittlere quadratische Fehler $\mathrm{MSE}_j$ des j-ten Modells $M_j$ berechnet sich bekanntermaßen aus

$$\mathrm{MSE}_j = \frac{1}{\mathrm{N}} \sum_{i=1}^{\mathrm{N}} (y(\mathbf{u}_i) - \hat{y}_j(\mathbf{u}_i))^2$$

Die Komplexität wird im Akaike Informationskriterium einfach in Form der Anzahl $p_j$ von Modellparametern des j-ten Modells $M_j$ bewertet. Hier gibt es auch bekannt Abwandlungen, z.B. wird im Falle eines neuronalen Netzwerkes als Modellstruktur für das j-te Modell $M_j$ häufig die Anzahl der effektiven Parameter, die nach bekannter, hier nicht näher ausgeführter Weise berechnet werden können, für die Bewertung der Komplexität herangezogen. Ebenso ist es bekannt, die Komplexität mit einem Faktor $\alpha$ (in der obigen Gleichung für $\mathrm{AIC}_j$ angedeutet), den sogenannten Risikoabneigungs-Parameter (risk aversion parameter), zu gewichten.

Die Wichtungsfaktoren $w_j$ für die einzelnen Modelle $M_j$ werden dann gemäß der zugehörigen bestimmten Plausibiltät nach dem Akaike Informationskriterium $\mathrm{AIC}_j$ mit $w_j = e^{-\frac{1}{2}\mathrm{AIC}_j}$ berechnet und auf 1 normiert.

Das Problem bei diesem Akaike Informationskriterium AIC ist, dass dieses zwar schnell berechnet werden kann, aber für eine große Anzahl N von bekannten Datenpunkten (gemessene Ausgangsgröße y an einer bestimmten Eingangsgröße $\mathbf{u}$) ausgelegt ist. Die bekannten Datenpunkte sind dabei häufig auch die Datenpunkte, mit denen die Modelle $M_j$ trainiert wurden. Abgesehen davon, müssen die Modellstrukturen (für die Anzahl der Parameter $p_j$) der Modelle $M_j$ bekannt sein, um die Plausibiltät und damit die Wichtungsfaktoren $w_j$ berechnen zu können.

Für die gegenständliche Anwendung ist aber eine möglichst geringe Anzahl von bekannten Datenpunkten erwünscht, da der Aufwand für Prüfstandversuche und Messungen am Prüfstand so weit wie möglich reduziert werden soll.

Für eine kleinere Anzahl von Datenpunkten N wurde ein angepasstes Akaike Informationskriterium in

$$\mathrm{AIC}_{j,C} = \mathrm{AIC}_j + 2\frac{(\mathrm{p}_j + 1) \cdot (\mathrm{p}_j + 2)}{\mathrm{N} - \mathrm{p}_j - 2}$$

der Form vorgeschlagen. Aber auch dieses angepasste Akaike Informationskriterium liefert für die hier vorliegende kleine Anzahl von Datenpunkten nur unbefriedigende Ergebnisse. Als kleine Anzahl von Datenpunkten wird im Sinne der gegenständlichen Erfindung eine Anzahl N verstanden, die mit der Anzahl $p_j$ der Modellparameter vergleichbar ist, also $N \approx p_j$, wobei N und $p_j$ vorzugsweise dieselbe Grö-ßenordnung haben. Insbesondere ist es ein Ziel der Erfindung, die Anzahl N der vermessenen Datenpunkte so gering wie möglich zu halten, um die notwendige Anzahl der Prüfstandsversuche bzw. Messungen am Prüfstand so gering wie möglich zu halten.

Weiters ist es bei der vorliegenden Anwendung auch oftmals so, dass die Modelle $M_j$ als bereits fertig trainierte Modelle vorliegen, die Modellstruktur dazu also gar nicht bekannt ist. Die Modelle $M_j$ des Modell-Ensembles können damit teilweise auch als unbekannte Blackbox vorliegen. Das bekannte Akaike Informationskriterium AIC kann auf solche unbekannte Modelle $M_j$ zur Erstellung eines Modell-Ensembles aber nicht angewendet werden, da die Anzahl $p_j$ der Modellparameter nicht bekannt ist. Aufgrund dieser Nachteile des Akaike Informationskriteriums AIC kann dieses für die vorliegenden Bedingungen (kleine Anzahl verfügbarere Datenpunkte, möglicherweise keine Kenntnis der Modellstrukturen) für die Erstellung eines Modell-Ensembles nicht oder zumindest nicht zufriedenstellend eingesetzt werden.

Es ist daher eine Aufgabe der gegenständlichen Erfindung, ein Verfahren zur Erstellung eines Modell-Ensembles anzugeben, das mit einer geringen Anzahl von vorhandenen Datenpunkten und damit mit einem Minimum an Prüfstandversuchen auskommt und das keine Kenntnis der Modellstrukturen der Modelle des Modell-Ensembles benötigt.

Um für eine derart kleine Anzahl von tatsächliche vermessenen, verfügbaren Datenpunkten und für teilweise unbekannte Modelle die Wichtungsfaktoren für ein gutes Modell-Ensemble bestimmen zu können, wird erfindungsgemäß für jedes Modell ein empirisches Komplexitätsmaß, das über einen vorgegebenen Eingangsgrößenbereich die Abweichung der Modell-Ausgangsgröße von der auf einem Prüfstand für den physikalischen Prozess gemessenen Ausgangsgröße des realen physikalischen Prozesses bewertet, und ein Modellfehler ermittelt und aus dem empirisches Komplexitätsmaß und dem Modellfehler ein Oberflächen Informationskriterium gebildet, aus dem die Wichtungsfaktoren für das Modell-Ensemble ermittelt werden können. Damit wird nicht die Modellstruktur bewertet wie im Akaike Informationskriterium, sondern es wird ein empirisches Komplexitätsmaß verwendet, das die Komplexität eines Modells anhand der Abweichung des Modells vom zugrunde liegenden physikalischen Prozess bewertet. Hierbei wird nicht nur die Abweichung an den vermessenen Datenpunkten (Modellfehler) bewertet, sondern auch eine Abweichung zwischen diesen Datenpunkten, also über einen ganzen Eingangsgrößenbereich, die sich im empirischen Komplexitätsmaß niederschlägt. Damit ist die Kenntnis der Modellstrukturen der Modelle des Modell-Ensembles nicht mehr von Nöten. Durch die Verwendung des empirischen Komplexitätsmaßes kann auch die Anzahl der benötigten Datenpunkte stark verringert werden, sodass die Zeit am Prüfstand zum Vermessen der benötigten Datenpunkte ebenfalls stark verkürzt werden kann.

Der Modellfehler eines j-ten Modells kann auf einfache und rasch ermittelbare Weise als mittlerer quadratischer Fehler zwischen den an Eingangsgrößen gemessenen Ausgangsgrößen (Datenpunkten) des physikalischen Prozesses und den an diesen Eingangsgrößen berechneten Modell-Ausgangsgrößen gemäß der Beziehung

$$\text{MSE}_j = \frac{1}{N} \sum_{i=1}^{N} (y(\mathbf{u}_i) - \hat{y}_j(\mathbf{u}_i))^2$$

hung                                                              berechnet werden.

Besonders vorteilhaft wird das empirische Komplexitätsmaß eines j-ten Modells mit der Formel

$$c_j = \int_U \nabla \hat{y}_j(\mathbf{u})^T \nabla \hat{y}_j(\mathbf{u}) d\mathbf{u}$$

oder      der      Formel

$$c_j = \int_U \hat{y}_j(\mathbf{u})^T \hat{y}_j(\mathbf{u}) d\mathbf{u} - \frac{1}{N} \sum_{i=1}^{N} \hat{y}_j(\mathbf{u}_i)^T \hat{y}_j(\mathbf{u}_i)$$

berechnet. Mit diesen empirischen Komplexitätsmaßen lässt sich ein besonders gutes Modell-Ensemble ermitteln, das insbesondere besser ist, als jedes einzelne Modell des Modell-Ensemble.

Um einen Freiheitsgrad für die Ermittlung der Wichtungsfaktoren zu haben, wird das empirische Komplexitätsmaß vorzugsweise mit einem Komplexitäts-Aversionsparameter gewichtet.

In einer einfachen Ausgestaltung der Erfindung lassen sich die Wichtungsfaktoren jedes Modells des Modell-Ensembles aus der Formel $w_j = e^{-\frac{1}{2}\text{SIC}_j}$ berechnen.

In einer besonders vorteilhaften Ausgestaltung der Erfindung ist vorgesehen, dass für das Modell-Ensemble das Oberflächen Informationskriterium aus einer Fehlermatrix, die die Modellfehler der Modelle enthält, und einer Komplexitätsmaßmatrix, die die empirischen Komplexitätsmaße der Modelle $M_j$ enthält, gebildet wird, wobei die Fehlermatrix und die Komplexitätsmaßmatrix gemäß der Formel SIC = $\{\mathbf{w}^T\mathbf{F}\mathbf{w}+\mathbf{w}^T\mathbf{C}\mathbf{w}\}$ jeweils zweimal durch einen Wichtungsvektor, der die Wichtungsfaktoren der Modelle enthält, gewichtet werden und das Oberflächen Informationskriterium des Modell-Ensembles hinsichtlich der Wichtungsfaktoren minimiert wird. Durch die Optimierung lassen sich Wichtungsfaktoren des Modell-Ensembles bestimmen, die einen besonders kleinen Fehler zwischen Modell-Ausgangsgröße des Modell-Ensembles und dem realen physikalischen Prozess ergeben.

Hierbei ist es vorteilhaft, wenn die Fehlermatrix als Produkt einer Matrix E berechnet wird, wobei die Matrix mit der Formel $\mathbf{E} = (y(\mathbf{u}_i)\text{-}\hat{y}_j(\mathbf{u}_i))$ berechnet wird.

Ganz besonders vorteilhaft ist es dabei, wenn die Komplexitätsmaßmatrix durch einen Komplexitäts-Aversionsparameter gewichtet wird, da man damit einen Freiheitsgrad erhält, mittel dem man die Fehler zwischen Modell-Ausgangsgröße des Modell-Ensemble und dem realen physikalischen Prozess noch weiter reduzieren kann.

Dazu kann in einer ganz besonders vorteilhaften Ausgestaltung der Erfindung vorgesehen sein, dass die Wichtungsvektoren für verschiedene Komplexitäts-Aversionsparameter berechnet werden und daraus der zu einem gewählten Komplexitäts-Aversionsparameter zugehörigen Wichtungsvektor als optimaler Wichtungsvektor für das Modell-Ensemble ausgewählt werden, oder dass der Wichtungsvektor für verschiedene Komplexitäts-Aversionsparameter berechnet werden und daraus zur Bestimmung des optimalen Wichtungsvektors      der      Zusammenhang

$$\left\{ \mathbf{w}_{\alpha_K}^T \mathbf{F} \mathbf{w}_{\alpha_K} + \frac{2}{N} \sigma^2 \mathbf{w}_{\alpha_K}^T \mathbf{p} \right\}$$

bezüglich der für die verschiedenen Komplexitäts-Aversionsparameter berechnete Wichtungsvektoren minimiert wird.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt

Fig.1 ein Modell-Ensemble mit einer Mehrzahl von mit Wichtungsfaktoren gewichteten Modellen,
Fig.2 die Annäherung von Datenpunkten durch verschieden komplexe Modelle,
Fig.3 der Trainings- und Validierungsfehler in Abhängigkeit von der Anzahl der Modellparameter und
Fig.4 und 5 die Wirkung der erfindungsgemäßen Berechnung der Wichtungsfaktoren.

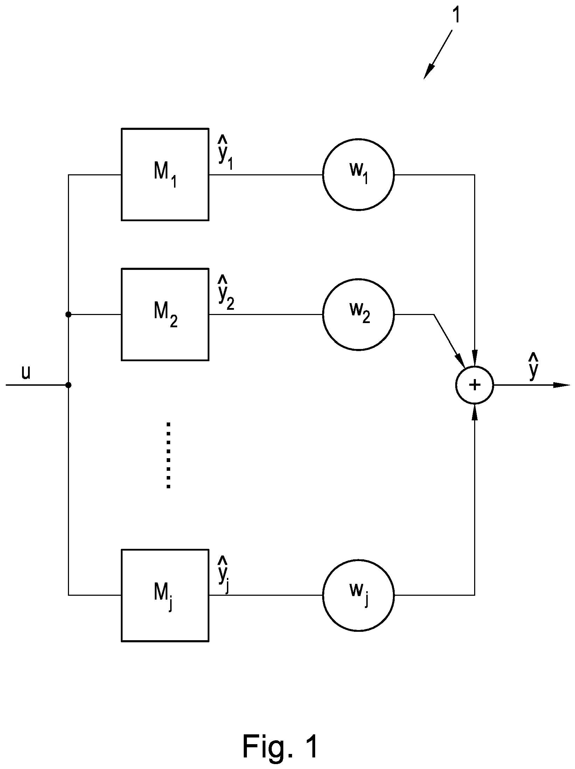

Ein Modell-Ensemble 1, wie in Fig.1 dargestellt, besteht aus einer Anzahl j von Modellen $M_j$. Jedes Modell $M_j$ ist durch eine Modellstruktur, beispielsweise ein neuronales Netzwerk, ein Kriging Modell, ein lineares Modellnetzwerk, ein Polynom, etc., und durch eine festgelegte Anzahl $p_j$ von Modellparametern $\mathbf{P}_j$ = $\{p_{1,j}, ..., p_{pj,j}\}$ bestimmt. Die Modellparameter $\mathbf{P}_j$ wurden oder werden durch ein geeignetes Verfahren trainiert oder bestimmt und sind in der Regel bekannt. Jedes Modell $M_j$ bildet

einen Eingangsgrößenvektor $\mathbf{u} = \{u_1, ..., u_k\}$ auf einen Schätzwert der Ausgangsgröße $\hat{y}_j$ des modellierten physikalischen Prozesses ab. Die reale Ausgangsgröße y des physikalischen Prozesses, die z.B. gemessen werden kann, wird durch das Modell $M_j$ angenähert. Beispielsweise enthält der Eingangsgrößenvektor $\mathbf{u}$ die Eingangsgrößen Drehmoment und Drehzahl eines Verbrennungsmotors, sowie die Kühlwassertemperatur des Verbrennungsmotor und geschätzt wird eine Emissions- oder Verbrauchsgröße. Die Eingangsgrößen $u_i$ im Eingangsgrößenvektor $\mathbf{u}$ können innerhalb eines vorgegebenen oder festgelegten Eingangsgrößenbereich U, mit $\mathbf{u} \in$ U, variieren.

Mit dem Modell-Ensemble 1, bzw. den darin enthaltenen Modellen $M_j$, wird als physikalischer Prozess z.B. eine Emissions- oder Verbrauchsgröße eines Verbrennungsmotor, wie beispielsweise die NOx-Emission, die CO- oder CO2-Emission oder der Kraftstoffverbrauch, als Ausgangsgröße $\hat{y}$ des Modell-Ensembles 1, bzw. als Modell-Ausgangsgrößen $\hat{y}_j$ der Modelle $M_j$, geschätzt. Der Einfachheit halber wird in der folgenden Beschreibung ohne Einschränkung der Allgemeinheit von einer einzigen Ausgangsgröße y ausgegangen, wobei natürlich auch ein Ausgangsgrößenvektor $\mathbf{y}$ bestehend aus mehreren Ausgangsgrößen y möglich ist.

Im Modell-Ensemble 1 wird jede Modell-Ausgangsgröße $\hat{y}_j$ mit einem Wichtungsfaktor $w_j$ gewichtet und die Ausgangsgröße $\hat{y}$ des Modell-Ensembles 1 ergibt sich als gewichtete Summe der Modell-Ausgangsgrößen $\hat{y}_j$ der einzelnen Modelle $M_j$ in der Form

$$\hat{y}(\mathbf{u}) = \sum_j w_j \hat{y}_j(\mathbf{u}).$$

In der Beschreibung wird der Einfachheit halber auch $\hat{y}$ bzw. $\hat{y}_j$ anstatt der korrekten Notation $\hat{y}(\mathbf{u})$ bzw. $\hat{y}_j(\mathbf{u})$ verwendet. Hinsichtlich der Wichtungsfaktoren $w_j$ sind vorzugsweise die Randbedingun-

$$\sum_j w_j = 1$$

gen $w_j \in [0,1]$ und zu berücksichtigen. Es stellt sich dabei das Problem, die Wichtungsfaktoren $w_j$ bestmöglich zu bestimmen, um die Ausgangsgröße y des physikalischen Prozesses bestmöglich durch das Modell-Ensemble 1, bzw. durch dessen Ausgangsgröße $\hat{y}$, anzunähern. Ziel ist es dabei natürlich, dass das Modell-Ensemble 1 die Ausgangsgröße y des physikalischen Prozesses über den gesamten bzw. den interessanten Eingangsgrößenbereich U besser schätzen soll, als das beste Modell $M_j$ des Modell-Ensembles 1.

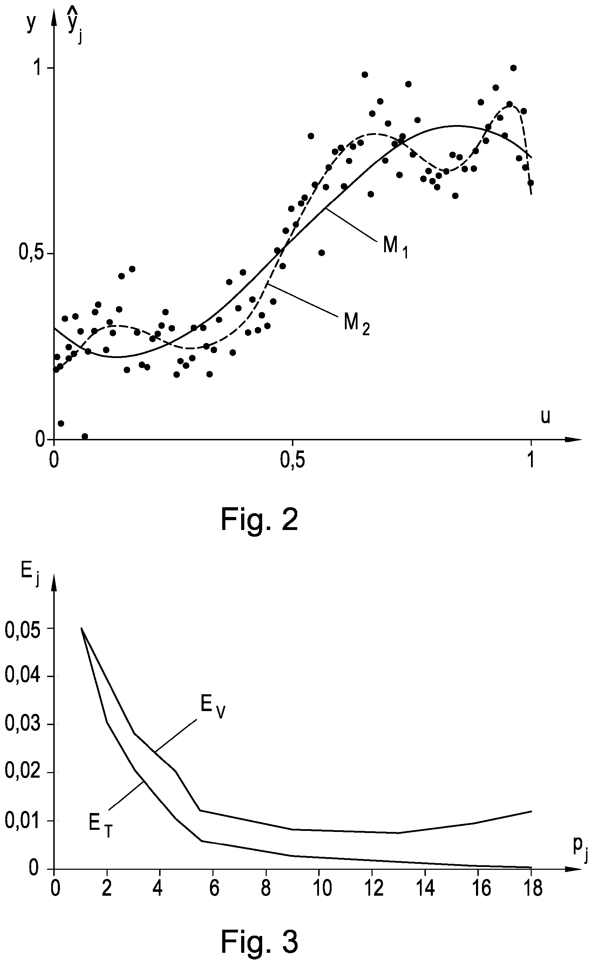

Fig.2 zeigt die die Modell-Ausgangsgröße $\hat{y}_j$ eines j-ten Modells $M_j$ als Funktion einer einzigen Eingangsgröße u (das ist ohne Einschränkung der Allgemeinheit der einfachste Fall) darstellt. Darin sind die Punkte gemessene Datenpunkte, also jeweils eine gemessene Ausgangsgröße y(u) an einer Eingangsgröße u. Ein erstes Modell $M_1$ mit der zugehörigen Modell-Ausgangsgröße $\hat{y}_{j=M_1}$ nähert die gemessene Ausgangsgröße y durch ein einfaches Modell an. Das Modell $M_2$ mit der zugehörigen Modell-Ausgangsgröße $\hat{y}_{j=M_2}$ stellt ein etwas komplexeres Modell dar, das die gemessene Ausgangsgröße y schon besser (im Sinne einer kleineren Abweichung des Modells $M_j$ vom zugrunde liegenden physikalischen Prozess) annähert. Die bessere Annäherung durch das Modell $M_2$ wird allerdings erkauft mit einer größeren Modellkomplexität durch mehr Modellfreiheitsgrade in Form einer größeren Anzahl $p_j$ an Modellparametern. Komplexere Modelle nähern im Allgemeinen den realen physikalischen Prozess besser an, benötigen dafür aber mehr Modellparameter und auch mehr Daten zum Trainieren des Modells und sind auch empfindlicher auf Änderungen der Modellparameter.

Dieser grundlegende Zusammenhang ist in Fig.3 dargestellt. Darin ist beispielhaft der Modellfehler E (z.B. der obige MSE) des Modells $M_j$ über die Anzahl der Modellparameter $p_j$ aufgetragen. Einmal als Modellfehler $E_T$ beim Training des Modells $M_j$ mit den verfügbaren Trainingsdaten (alle oder ein Teil der verfügbaren gemessenen Datenpunkte). Und das andere Mal als Modellfehler $E_V$, der mit vorgegebenen Validierungsdaten (beliebige verfügbare Messwerte des Prozessausgangs y(u) bei bestimmten Eingangsgrößen $\mathbf{u}$) ermittelt wurde. Für die vorliegende Anwendung hat man aber auch das Problem, dass keine oder nur sehr wenige Validierungsdaten verfügbar sind.

Um die Komplexität des j-ten Modells $M_j$ zu bewerten, wird erfindungsgemäß ein empirisches Komplexitätsmaß $c_j$ verwendet, das nicht die Modellstruktur bewertet wie der Stand der Technik, sondern das über einen bestimmten Eingangsgrößenbereich U die Abweichung der Modell-Ausgangsgröße $\hat{y}_j$ von der Ausgangsgröße y des physikalischen Prozesses bewertet. Im Gegensatz zu einem Modellfehler E, der die Abweichung zwischen Modell $M_j$ und dem physikalischen Prozess an bestimmten vermessenen Datenpunkten betrifft, bewertet das empirische Komplexitätsmaß $c_j$ die Abweichung über einen ganzen Eingangsgrößenbereich U, also insbesondere auch zwischen den vermessenen Datenpunkten. Hierbei bieten sich verschiedene Ansätze für eine derartige Bewertung an.

In einem ersten Ansatz wird die Oberfläche der Modell-Ausgangsgröße $\hat{y}_j$ über den Eingangsgrößenbereich U zur Bewertung herangezogen. Der dahinter liegende erfindungsgemäße Gedanke kann auch anhand der Fig.2 erläutert werden. Wie ersichtlich, ist (im hier dargestellten eindimensionalen Fall) die Länge der Modell-Ausgangsgröße $\hat{y}_j$ (was im verallgemeinerten Fall der Oberfläche entspricht) über den Eingangsgrößenbereich $\mathbf{u} \in$ U umso größer, umso komplexer das Modell $M_j$ wird, also je besser die Ausgangsgröße y durch das Modell $M_j$ angenähert wird. Das kann natürlich auf eine beliebige Dimension (Anzahl der Eingangsgrößen $u_i$ im Eingangsvektor $\mathbf{u}$) verallgemeinert werden. Das empirische Komplexitätsmaß $c_j$ zur Bewertung der Abweichung des Modells $M_j$ vom physikalischen Prozess über den Eingangsgrößenbereich U auf Basis der Oberfläche wird gemäß dem folgenden Zusammenhang ermittelt:

$$c_j = \int_U \nabla \hat{y}_j(\mathbf{u})^T \nabla \hat{y}_j(\mathbf{u}) d\mathbf{u} \ .$$

Dabei ist $\nabla$ der bekannte Nabla-Operator bezüglich der Eingangsgrößen im Eingangsgrößenvektor

$$\nabla = \left( \frac{\partial}{\partial u_1}, ..., \frac{\partial}{\partial u_i} \right).$$

$\mathbf{u}$, also Das Integral wird über einen bestimmten, vorzugsweise den gesamten, Eingangsgrößenbereich $\mathbf{u} \in U$ ermittelt. Dieses Integral wächst monoton mit der Oberfläche der Modell-Ausgangsgröße $\hat{y}_j$. Als empirisches Komplexitätsmaß $c_j$ wird hier also die Oberfläche der Modell-Ausgangsgröße $\hat{y}_j$ über den Eingangsgrößenbereich U bewertet.

Als alternatives empirisches Komplexitätsmaß $c_j$, das die Abweichung des Modells $M_j$ bzw. der Modell-Ausgangsgröße $\hat{y}_j$ von der Ausgangsgröße y des physikalischen Prozesses bewertet, kann die Varianz der Modell-Ausgangsgröße $\hat{y}_j$ herangezogen werden. Die Varianz (auch als zweites Moment einer Zufallsvariablen bezeichnet) ist bekanntermaßen die erwartete quadratische Abweichung einer Zufallsvariable von ihrem Erwartungswert. Umgelegt auf die gegenständliche Erfindung wird mit der Varianz die Modell-Ausgangsgröße $\hat{y}_j$ an den vorhandenen N Datenpunkten mit der Modell-Ausgangsgröße $\hat{y}_j$ zwischen diesen Datenpunkten verglichen, was hier als Variabilität bezeichnet wird. Der Gedanke dahinter ist der, dass ein Modell $M_j$ mit einer erhöhten Variabilität den zugrundeliegenden physikalischen Prozess über den Eingangsgrößenbereich U im Allgemeinen schlechter prädiziert, als ein Modell $M_j$ mit einer niedrigeren Variabilität. Das liegt am Umstand, dass je besser das Modell $M_j$ die gemessenen Datenpunkte annähert, also je komplexer das Modell $M_j$ wird, desto größer wird die Wahrscheinlichkeit einer erhöhten Variabilität. Wird die Variabilität allerdings zu groß, so erhöht sich auch das Risiko der Überanpassung (Overfit) des Modells $M_j$. Das typische Verhalten eines solchen überangepassten oder zu komplexen Modells $M_j$ ist eine über den Eingangsgrößenbereich U stark variierende Modell-Ausgangsgröße $\hat{y}_j$, was wiederum zu einer größeren Abweichung zwischen realer Ausgangsgröße y und der Modell-Ausgangsgröße $\hat{y}_j$ führen kann. Diese auf der Varianz basierende Variabilität kann im empirischen Komplexitätsmaß $c_j$ abgebildet werden, indem das empirische Komplexitätsmaß $c_j$ gemäß der folgenden Formel berechnet wird.

$$c_j = \int_U \hat{y}_j(\mathbf{u})^T \hat{y}_j(\mathbf{u}) d\mathbf{u} - \frac{1}{N} \sum_{i=1}^N \hat{y}_j(\mathbf{u}_i)^T \hat{y}_j(\mathbf{u}_i)$$

Es liegt auf der Hand, dass es noch weitere Möglichkeiten gibt, um die Abweichung zwischen Modell $M_j$ und dem physikalischen Prozess, bzw. der Ausgangsgröße y des Prozesses und der Modell-Ausgangsgröße $\hat{y}_j$, zu bewerten. Hierbei bleibt der Grundgedanke unverändert, nämlich der, dass das empirisches Komplexitätsmaß $c_j$ umso größer wird, umso komplexer das zugrunde liegende Modell $M_j$ ist. Das empirische Komplexitätsmaß $c_j$ bewertet damit auch die Komplexität des Modells $M_j$.

Aus dem empirischen Komplexitätsmaß $c_j$ wird erfindungsgemäß ein Oberflächen Informationskriterium $SIC_j$ des j-ten Modells $M_j$ abgeleitet, das, analog zum obigen Akaike Informationskriterium AIC aus dem Stand der Technik, wieder aus dem Modellfehler $E_j$ des Modells $M_j$ und dem empirischen Komplexitätsmaß $c_j$ gebildet wird, also

$$SIC_j = \left( E_j + \alpha_K \cdot c_j^S \right).$$

Als Modellfehler $E_j$ wird beispielsweise wieder der mittlere quadratischen

$$MSE_j = \frac{1}{N} \sum_{i=1}^N (y(\mathbf{u}_i) - \hat{y}_j(\mathbf{u}_i))^2$$

Fehler verwendet, wobei aber natürlich auch ein beliebiger anderer Modellfehler $E_j$, beispielsweise in Form der mittleren absoluten Abweichung, verwendet werden könnte.

Der vorzugsweise verwendete Parameter $\alpha_K \in [0, \infty[$ im Oberflächen Informationskriterium $SIC_j$ wird als Komplexitäts-Aversionsparameter verwendet. Dieser stellt den einzigen Freiheitsgrad dar, mit dem die Komplexität der Modelle $M_j$ des Modell-Ensembles 1 weiter bestraft werden können. Je größer der Komplexitäts-Aversionsparameter $\alpha_K$ wird, umso stärker geht die Komplexität in das Oberflächen Informationskriterium $SIC_j$ ein. Kleine Komplexitäts-Aversionsparameter $\alpha_K$ bevorzugen daher komplexere Modelle $M_j$, d.h. Modelle $M_j$ mit mehr Freiheitsgraden (Anzahl der Modellparameter $p_j$).

Analog zum bekannten Akaike Informationskriterium könnten die Wichtungsfaktoren $W_j$ wieder aus

$$w_j = e^{-\frac{1}{2}SIC_j}$$

ermittelt werden, wobei als Randbedingungen vorzugsweise $W_j \in [0,1]$ und $\sum_j w_j = 1$ berücksichtigt werden. Obwohl damit bereits ein Modell-Ensemble 1 gebildet werden kann, das unter den gegebenen Bedingungen den realen Prozess besser, also mit geringerem Fehler, annähert, als ein mit dem Akaike Informationskriterium AIC gebildetes Modell-Ensemble, kann die Qualität des Modell-Ensembles 1 erfindungsgemäß noch weiter verbessert werden. Hierzu wird wie nachfolgend erläutert vorgegangen.

Es lässt sich zeigen, dass sich der mittlere quadratische Modellfehler MSE und das empirische Komplexitätsmaß c des Modell-Ensembles 1 bezüglich eines Wichtungsvektors $\mathbf{w}$, der die Wichtungsfaktoren $w_j$ der j Modelle $M_j$ enthält, jeweils als quadratische Funktion der

Modellfehler $E_j$ und der empirischen Komplexitätsmaße $c_j$ der Modelle $M_j$ in der Form SIC = $\{\mathbf{w}^T\mathbf{F}\mathbf{w}+\alpha_K\mathbf{w}^T\mathbf{C}\mathbf{w}\}$ darstellen lässt. Der optionale Komplexitäts-Aversionsparameter $\alpha_K$ stellt darin einen Freiheitsgrad in der Ermittlung der Wichtungsfaktoren $w_j$ der j Modelle $M_j$ dar.

Hierbei bezeichnet $\mathbf{F}$ eine Fehlermatrix, die die Modellfehler $E_j$ der Modelle $M_j$ beinhaltet, und $\mathbf{C}$ eine Komplexitätsmaßmatrix, der die empirischen Komplexitätsmaße $c_j$ der Modelle $M_j$ beinhaltet. Im Falle des mittleren quadratischen Fehlers $MSE_j$ als Modellfehler $E_j$ und mit einer Matrix $\mathbf{E} = (y(\mathbf{u}_i)-\hat{y}_j\mathbf{u}_i))$, für alle i $\in$ N Datenpunkte und j, ergibt sich die Fehlermatrix $\mathbf{F}$ als Produkt der Matrix $\mathbf{E}$ mit sich selbst gemäß $\mathbf{F}=\mathbf{E}^T\mathbf{E}$. Je nach gewähltem empirischen Komplexitätsmaß $c_j$ ergibt sich die Komplexitätsmaßmatrix $\mathbf{C}$ beispielsweise zu

$$\mathbf{C} = \int_U \nabla\hat{y}_a(\mathbf{u})^T \nabla\hat{y}_a(\mathbf{u})d\mathbf{u}$$

bzw.

$$\mathbf{C} = \int_U \hat{y}_a(\mathbf{u})^T \hat{y}_a(\mathbf{u})d\mathbf{u} - \frac{1}{N}\sum_{i=1}^{N} \hat{y}_a(\mathbf{u}_i)^T\hat{y}_a(\mathbf{u}_i)$$

jeweils mit einem Modell-Ausgangsgrößenvektor $\hat{y}_a$, der die Modell-Ausgangsgrößen $\hat{y}_j$ der j Modelle enthält, also $\hat{y}_a = \{\hat{y}_1...\hat{y}_j\}$. Dabei können die Matrizen $\mathbf{F}$ und $\mathbf{C}$ vorab und vor allem ohne Kenntnis der Modelle $M_j$ oder deren Modellstrukturen bzw. der Anzahl der Modellparameter $p_j$ berechnet werden.

Zur Bestimmung der Wichtungsfaktoren $w_j$ (bzw. analog des Wichtungsvektors $\mathbf{w}$) kann das Oberflächen Informationskriterium SIC des Modell-Ensembles 1 für einen bestimmten Komplexitäts-Aversionsparameter $\alpha_K$ hinsichtlich der Wichtungsfaktoren $w_j$ optimiert, insbesondere minimiert werden. Daraus kann ein Optimierungsproblem in der Form

$$\mathbf{w}_\alpha = \arg\min_{\mathbf{w}} \left\{\mathbf{w}^T\mathbf{F}\mathbf{w} + \alpha_K\mathbf{w}^T\mathbf{C}\mathbf{w}\right\}$$

abgeleitet werden.

Wie leicht zu erkennen ist, ist das ein quadratisches Optimierungsproblem, das mit verfügbaren Standard Lösungsalgorithmen für einen vorgebenen Komplexitäts-Aversionsparameter $\alpha_K$ rasch und effizient gelöst werden kann.

Als Randbedingungen für die Optimierung gelten vorzugweise $w_j \in$ [0,1] und

$$\sum_j w_j = 1.$$

Es kann ein beliebiger Anfangs-Wichtungsvektor $\mathbf{w}$ vorgegeben werden.

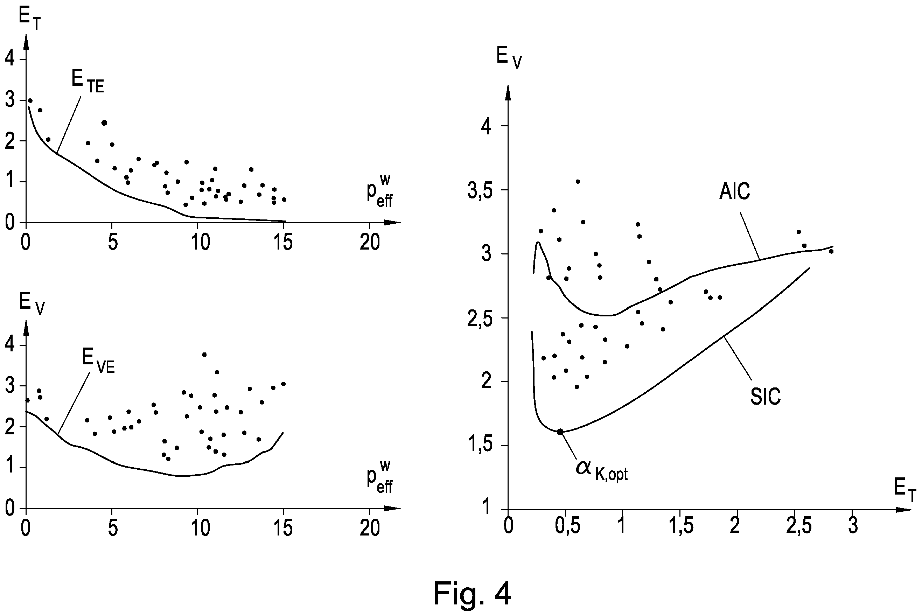

Das Ergebnis der Optimierung des Oberflächen Informationskriteriums SIC des Modell-Ensembles 1 zur Bestimmung der Wichtungsfaktoren $w_j$ wird anhand der Fig.4 beschrieben. Dem Ausführungsbeispiel liegen j für eine kleine Anzahl an Datenpunkten trainierte Modelle $M_j$ zugrunde. Darin zeigen die beiden Diagramme links den Trainingsfehler $E_{TE}$ und den Validierungsfehler $E_{VE}$ des Modell-Ensembles 1, das mit der oben beschriebenen Optimierung des Oberflächen Informationskriteriums SIC ermittelt wurde. Auf der Abszisse ist eine empirische Modell-Ensemble-Komplexität $p_{eff}^{\mathbf{w}}$ aufgetragen, die sich aus den Komplexitäten der einzelnen Modelle $M_j$ ableitet in der Form $p_{eff}^{\mathbf{w}} = \mathbf{w}^T\mathbf{p}$. Dabei ist $\mathbf{w}$ der für einen bestimmten Komplexitäts-Aversionsparameter $\alpha_K$ ermittelte Wichtungsvektor und der Vektor $\mathbf{p}$ enthält für alle j Modelle $M_j$ die Anzahl der Modellparameter $p_j$. Wird der Komplexitäts-Aversionsparameter $\alpha_K$ variiert und für jeden Komplexitäts-Aversionsparameter $\alpha_K$ die Optimierung gelöst, womit man jeweils einen zugehörigen Wichtungsvektor $\mathbf{w}_{\alpha_K}$ erhält, erhält man die Kurven in den beiden linken Diagrammen. Die Punkte in den Diagrammen stellen jeweils den Trainingsfehler $E_{Tj}$ und den Validierungsfehler $E_{Vj}$ eines j-ten Modells $M_j$ des Modell-Ensembles 1 dar (dafür wird jeweils die Anzahl $p_j$ der Modellparameter des j-ten Modells $M_j$ aufgetragen). Wie leicht zu erkennen ist, ist das erfindungsgemäß ermittelte Modell-Ensemble 1 immer besser, d.h. mit kleinerem Fehler, als das jeweils beste einzelne Modell $M_j$.

Mit dem Diagramm rechts in Fig.4 wird der Validierungsfehler $E_V$ über dem Trainingsfehler $E_T$ dargestellt. Die Punkte stellen dabei wieder die einzelnen Modelle $M_j$ dar. Darin wird auch das mit dem bisher üblichen Akaike Informationskriterium AIC ermittelte Modell-Ensemble 1 mit dem erfindungsgemäß mit dem Oberflächen Informationskriterium SIC ermittelten Modell-Ensemble 1 verglichen. Wie eindeutig erkennbar ist, performt das Oberflächen Informationskriterium SIC nicht nur wesentlich besser, als das Akaike Informationskriterium AIC, sondern auch besser als jedes einzelne Modell $M_j$.

Dem rechten Diagramm in Fig.4 kann aber auch entnommen werden, dass es einen Komplexitäts-Aversionsparameter $\alpha_{K,opt}$ gibt, der den Modellfehler des Modell-Ensembles 1 minimiert. Es kann nun versucht werden, diesen optimalen Komplexitäts-Aversionsparameter $\alpha_{K,opt}$ manuell zu finden oder sich diesem zumindest manuell anzunähern. In einem zweiten, der Optimierung des Oberflächen Informationskriteriums SIC folgenden Schritt kann aber auch versucht werden, den optimalen Komplexitäts-Aversionsparameter $\alpha_{K,opt}$, und damit auch den zugeordneten optimalen Wichtungsvektor $\mathbf{w}_{opt}$, zu ermitteln, wobei wie nachfolgend beschrieben vorgegangen wird.

Hierzu werden zuerst für eine Mehrzahl von Komplexitäts-Aversionsparameter $\alpha_K$ die zugehörigen Wichtungsvektoren $\mathbf{w}_{\alpha_K}$ ermittelt. Damit erhält man einen Satz von Wichtungsvektoren $\left\{\mathbf{w}_{\alpha_K}\right\}_{\alpha_K \geq 0}$. Unter Verwendung der bekannten Mallow Gleichung wird der Komplexitäts-Aversionsparameter $\alpha_K$ als optimaler Komplexitäts-Aversionsparameter $\alpha_{K,opt}$ gewählt, der das folgende Optimierungsproblem löst

$$\mathbf{w}_{opt} = \arg\min_{\mathbf{w}_{\alpha_K}} \left\{ \mathbf{w}_{\alpha_K}^T \mathbf{F} \mathbf{w}_{\alpha_K} + \frac{2}{N} \sigma^2 \mathbf{w}_{\alpha_K}^T \mathbf{p} \right\}.$$

Darin ist $\mathbf{F}$ wieder die Fehlermatrix ($\mathbf{F}=\mathbf{E}^T\mathbf{E}$) und ist $\sigma$ die Standardabweichung der verfügbaren Datenpunkte, die aber in der Regel nicht bekannt ist. Allerdings gibt es bekannte Methoden (z.B. wie in Hansen, B.E., "Least squares model averaging", Econometrica, 75(4), 2007, S.1175-1189 beschrieben), um die Standardabweichung $\sigma$ aus den vorhandenen Datenpunkten zu schätzen. Der Vektor $\mathbf{p}$ enthält wieder für alle j Modelle $M_j$ die Anzahl der Modellparameter $p_j$. Für diesen zweiten Schritt ist daher die Kenntnis der Modelle $M_j$ bzw. deren Modellstrukturen erforderlich.

Diese Optimierung wird allerdings nicht direkt gelöst, sondern hinsichtlich des zuerst ermittelten Satzes an Wichtungsvektoren $\left\{\mathbf{w}_{\alpha_K}\right\}_{\alpha_K \geq 0}$. D.h. es wird der zu einem bestimmten Komplexitäts-Aversionsparameter $\alpha_K$ zugehörige Wichtungsvektor $\mathbf{w}$ als optimaler Wichtungsvektor $\mathbf{w}_{opt}$ ausgewählt, der den minimalen Ausdruck $\left\{ \mathbf{w}_{\alpha_K}^T \mathbf{F} \mathbf{w}_{\alpha_K} + \frac{2}{N} \sigma^2 \mathbf{w}_{\alpha_K}^T \mathbf{p} \right\}$ ergibt.

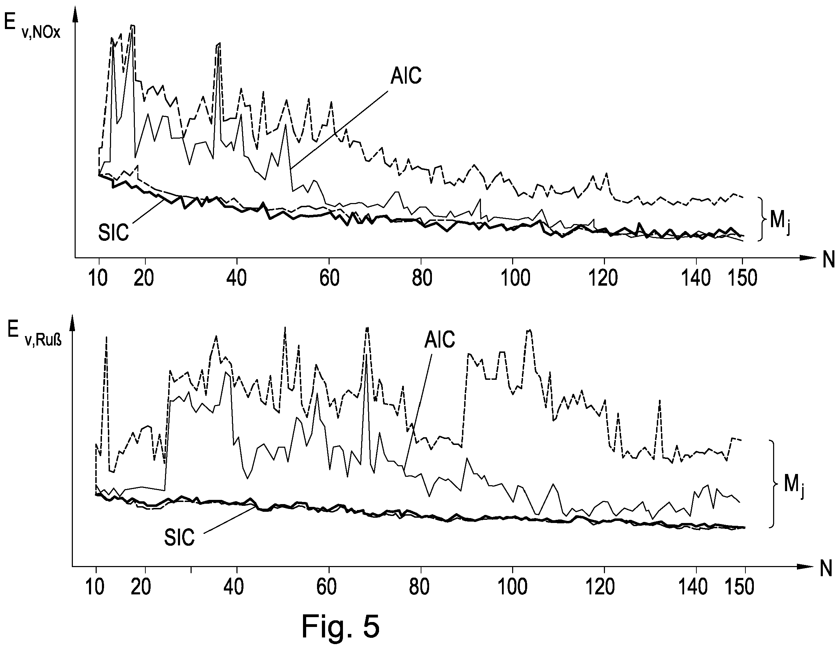

Mit Fig.5 wird noch die Wirkung der erfindungsgemäßen Methode zur Bestimmung der Wichtungsfaktoren $w_j$ für eine kleine Anzahl N von verfügbaren Datenpunkten anhand eines Beispiels demonstriert. Hierzu wurden an einem bestimmten Verbrennungsmotor sowohl für die NOx-Emission, als auch die Rußemission jeweils 5.000 Datenpunkte vermessen, also jeweils ein Messwert für NOx und Ruß an 5.000 Eingangsvektoren $\mathbf{u}$, um für das Demonstrationsbeispiel ausreichend Daten zu haben. Der Eingangsvektor $\mathbf{u}$ umfasste hier beispielsweise fünf Eingangsgrößen $u_i$, nämlich Drehmoment, Drehzahl, Temperatur Kühlwasser, Stellung eines Variable-Turbinengeometrie-Turbolader und Stellung einer Abgasrückführung. Es wurden jeweils fünfzehn verschiedene Modelle $M_j$ (verschiedene Modellstrukturen und/oder verschiedene Anzahl von Modellparametern und/oder verschiedene Modellparameter) mit einer zufälligen Auswahl von Datenpunkten aus den 5.000 verfügbaren Datenpunkten trainiert. Die zufällige Auswahl wurde als verfügbare kleine Anzahl N von Datenpunkten verwendet. Dabei wurde die Anzahl N der verfügbaren Datenpunkte von zehn auf 150 gesteigert, also $10 \leq N \leq 150$. Die jeweils verbliebenen Datenpunkte (5.000 - N) wurden für das Beispiel als Validierungsdaten zur Validierung verwendet, um die Wirksamkeit der Erfindung zu verifizieren. In Fig.5 ist jeweils der Validierungsfehler für die NOx-Emission $E_{V,NOx}$ und die Rußemission $E_{v,Ruß}$ dargestellt. Der Validierungsfehler $E_V$ ist dabei der mittlere quadratische Fehler zwischen Modell-Ausgangsgröße $\hat{y}_j$ bzw. der Ausgangsgröße $\hat{y}$ des Modell-Ensembles 1 und den Validierungsdaten. Für jede Anzahl N an Datenpunkten ergibt sich ein bestes und ein schlechtestes Modell $M_j$ (strichlierte Linien in Fig.5). Diese Bandbreite der Modell $M_j$ ist in Fig.5 dargestellt. Zusätzlich wurde für jede Anzahl N an Datenpunkten ein Modell-Ensemble nach dem bekannten Akaike Informationskriterium AIC und ein Modell-Ensemble 1 mit dem erfindungsgemäßen Oberflächen Informationskriterium SIC ermittelt. Auch dazu sind die Validierungsfehler in den Diagrammen der Fig.5 dargestellt. Daraus ist unmittelbar ersichtlich, dass das erfindungsgemäß ermittelte Modell-Ensemble 1 nicht nur in der Regel besser als das jeweils beste Modell $M_j$ ist, sondern auch besser als das Modell-Ensemble, das mit dem Akaike Informationskriterium AIC ermittelt wurde.

Ein erfindungsgemäß bestimmtes Modell-Ensemble wird beispielsweise bei der Kalibrierung eines technischen Systems, beispielsweise eines Verbrennungsmotors, verwendet. Bei der Kalibrierung werden in einem bestimmten Betriebszustand des technischen Systems, gegeben durch Zustandsgrößen bzw. einen Zustandsgrößenvektor, Steuergrößen des technischen Systems, mit denen das technisches System gesteuert wird, variiert, um zumindest eine Ausgangsgröße des technischen Systems zu optimieren. Die Optimierung der Ausgangsgrößen durch Variation der Steuergrößen wird dabei in der Regel als Optimierungsproblem formuliert und gelöst. Hierfür gibt es hinlänglich bekannte Methoden. Die derart ermittelten Steuergrößen werden in Abhängigkeit vom jeweiligen Betriebszustand hinterlegt, z.B. in Form von Kennfeldern oder Tabellen. Dieser Zusammenhang kann dann verwendet werden, um das technische System in Abhängigkeit vom aktuellen Betriebszustand (der gemessen oder anderweitig bestimmt (z.B. geschätzt) wird) zu steuern. D.h. es werden aus dem hinterlegten Zusammenhang die für den jeweiligen Betriebszustand hinterlegten Steuergrößen ausgelesen und für die Steuerung des technischen Prozesses verwendet. Im Falle eines Verbrennungsmotors als technisches System wird der Betriebszustand oftmals durch messbare Größen wie die Drehzahl und das Drehmoment beschrieben, wobei auch andere Größen wie Temperatur Kühlwasser, Umgebungstemperatur, usw. verwendet werden können. Als Steuergrößen kommen bei einem Verbrennungsmotor oftmals die Stellung eines Variable-Turbinengeometrie-Turbolader, die Stellung einer Abgasrückführung oder ein Einspritzzeitpunkt zur Anwendung. Die zu optimierende Ausgangsgröße eines Verbrennungsmotor ist typischerweise der Verbrauch und/oder eine Emissionsgröße (z.B. NOx, CO, $CO_2$, etc.). Die Kalibrierung des Verbrennungsmotors soll also durch Vorgabe richtiger Steuergrößen sicherstellen, dass der Verbrauch und/oder die Emission im Betrieb minimal sind.

**Patentansprüche**

1. Verfahren zum Schätzen zumindest einer Ausgangsgröße (y) eines physikalischen Prozesses in Abhängigkeit von zumindest einer Eingangsgröße (u) mit einem Modell-Ensemble (1), wobei das Modell-Ensemble (1) aus einer Summe der jeweils mit einem Wichtungsfaktor ($w_j$) gewichteten Modell-Ausgangsgrößen ($\hat{y}_j$) einer Mehrzahl (j) von Modellen ($M_j$) gebildet wird, **dadurch gekennzeichnet, dass** für jedes Modell ($M_j$) ein empirisches Komplexitätsmaß ($c_j$), das über einen vorgegebenen Eingangsgrößenbereich (U) die Abweichung der Modell-Ausgangsgröße ($\hat{y}_j$) von der auf einem Prüfstand für den physikalischen Prozess gemessenen Ausgangsgröße (y) des realen physikalischen Prozesses bewertet, und ein Modellfehler ($E_j$) ermittelt werden und aus dem empirisches Komplexitätsmaß ($c_j$) und dem Modellfehler ($E_j$) ein Oberflächen Informationskriterium ($SIC_j$, SIC) gebildet wird, aus dem die Wichtungsfaktoren ($w_j$) für das Modell-Ensemble (1) ermittelt werden.

2. Verfahren nach Anspruch 1, **dadurch gekennzeichnet, dass** als Modellfehler ($E_j$) eines Modells ($M_j$) der mittlere quadratische Fehler ($MSE_j$) zwischen den an N Eingangsgrößen (u) gemessenen Ausgangsgrößen (y) des physikalischen Prozesses und den an diesen N Eingangsgrößen berechneten Modell-Ausgangsgrößen gemäß der Beziehung

$$MSE_j = \frac{1}{N} \sum_{i=1}^{N} (y(\mathbf{u}_i) - \hat{y}_j(\mathbf{u}_i))^2$$

verwendet wird.

3. Verfahren nach Anspruch 1, **dadurch gekennzeichnet, dass** das empirische Komplexitätsmaß ($c_j$) eines Modells ($M_j$) mit der Formel

$$c_j = \int_U \nabla \hat{y}_j(\mathbf{u})^T \nabla \hat{y}_j(\mathbf{u}) d\mathbf{u}$$

oder der Formel

$$c_j = \int_U \hat{y}_j(\mathbf{u})^T \hat{y}_j(\mathbf{u}) d\mathbf{u} - \frac{1}{N} \sum_{i=1}^{N} \hat{y}_j(\mathbf{u}_i)^T \hat{y}_j(\mathbf{u}_i)$$

berechnet wird.

4. Verfahren nach Anspruch 1, **dadurch gekennzeichnet, dass** das empirisches Komplexitätsmaß ($c_j$) mit einem Komplexitäts-Aversionsparameter ($\alpha_K$) gewichtet wird.

5. Verfahren nach einem der Ansprüche 1 bis 4, **dadurch gekennzeichnet, dass** die Wichtungsfaktoren ($w_j$) jedes Modells ($M_j$) des Modell-Ensembles (1) mit dem Oberflächen Informationskriterium ($SIC_j$) des Modells ($M_j$) aus der Formel $w_j = e^{-\frac{1}{2} SIC_j}$ berechnet werden.

6. Verfahren nach einem der Ansprüche 1 bis 3, **dadurch gekennzeichnet, dass** für das Modell-Ensemble (1) das Oberflächen Informationskriterium (SIC) aus einer Fehlermatrix (**F**), die die Modellfehler ($E_j$) der Modelle ($M_j$) enthält, und einer Komplexitätsmaßmatrix (**C**), die die empirischen Komplexitätsmaße ($c_j$) der Modelle ($M_j$) enthält, gebildet wird, wobei die Fehlermatrix (**F**) und die Komplexitätsmaßmatrix (**C**) gemäß der Formel SIC = {$\mathbf{w}^T\mathbf{F}\mathbf{w}+\mathbf{w}^T\mathbf{C}\mathbf{w}$} jeweils zweimal durch einen Wichtungsvektor (**w**), der die Wichtungsfaktoren ($w_j$) der Modelle ($M_j$) enthält, gewichtet werden und das Oberflächen Informationskriterium (SIC) des Modell-Ensembles (1) hinsichtlich der Wichtungsfaktoren ($w_j$) minimiert wird.

7. Verfahren nach Anspruch 6, **dadurch gekennzeichnet, dass** die Fehlermatrix (**F**) als Matrizenprodukt einer Matrix (**E**) berechnet wird, wobei die Matrix (**E**) mit der Formel **E** = $(y(\mathbf{u}_i)-\hat{y}_j(\mathbf{u}_i))$ berechnet wird.

8. Verfahren nach Anspruch 6 oder 7, **dadurch gekennzeichnet, dass** die Komplexitätsmaßmatrix (**C**) durch einen Komplexitäts-Aversionsparameter ($\alpha_K$) gewichtet wird.

9. Verfahren nach Anspruch 8, **dadurch gekennzeichnet, dass** die Wichtungsfaktoren ($w_j$) für verschiedene Komplexitäts-Aversionsparameter ($\alpha_K$) berechnet werden und daraus der zu einem gewählten Komplexitäts-Aversionsparameter ($\alpha_K$) zugehörige Wichtungsvektor ($\mathbf{w}_{\alpha_K}$) als optimaler Wichtungsvektor ($\mathbf{w}_{opt}$) für das Modell-Ensemble (1) ausgewählt wird.

10. Verfahren nach Anspruch 8, **dadurch gekennzeichnet, dass** Wichtungsvektoren ($\mathbf{w}_{\alpha_K}$) für verschiedene Komplexitäts-Aversionsparameter ($\alpha_K$) berechnet werden und daraus zur Bestimmung des optimalen Wichtungsvektors ($\mathbf{w}_{opt}$) der Zusammenhang $\left\{ \mathbf{w}_{\alpha_K}^T \mathbf{F} \mathbf{w}_{\alpha_K} + \frac{2}{N} \sigma^2 \mathbf{w}_{\alpha_K}^T \mathbf{p} \right\}$ bezüglich der für die verschiedenen Komplexitäts-Aversionsparameter ($\alpha_K$) berechneten Wichtungsvektoren ($\mathbf{w}_{\alpha_K}$)

minimiert wird.

## Claims

1. A method for estimating at least one output variable (y) of a physical process as a function of at least one input variable (u) with a model ensemble (1), whereas the model ensemble (1) being formed from a sum of model outputs ($\hat{y}_j$) from a plurality (j) of models ($M_j$) that have been weighted with a weighting factor ($w_j$), **characterized in that** for each model ($M_j$) an empirical complexity measurement ($c_j$), that evaluates over a specified input variable range (U) the deviation of the model output variable ($\hat{y}_j$) from the output variable (y) of the actual physical process, that is measured on a test bench for the physical process, and a model error ($E_j$) are determined, and a surface information criterion ($SIC_j$, SIC) is formed from the empirical complexity measurement ($c_j$) and the model error ($E_j$) from which the weighting factors ($w_j$) for the model ensemble (1) are determined.

2. The method according to claim 1, **characterized in that** the mean square error ($MSE_j$) between the output variables (y) of the physical process measured at N input variables (u) and the model output variables calculated at these N input variables is used as model error ($E_j$) of a model ($M_j$) according to the relationship

$$MSE_j = \frac{1}{N}\sum_{i=1}^{N}(y(\mathbf{u}_i) - \hat{y}_j(\mathbf{u}_i))^2 .$$

3. The method according to claim 1, **characterized in that** the empirical complexity measurement ($c_j$) of a model ($M_j$) is calculated using the formula

$$c_j = \int_U \nabla\hat{y}_j(\mathbf{u})^T \nabla\hat{y}_j(\mathbf{u})d\mathbf{u}$$

or the formula

$$c_j = \int_U \hat{y}_j(\mathbf{u})^T \hat{y}_j(\mathbf{u})d\mathbf{u} - \frac{1}{N}\sum_{i=1}^{N}\hat{y}_j(\mathbf{u}_i)^T \hat{y}_j(\mathbf{u}_i).$$

4. The method according to claim 1, **characterized in that** the empirical complexity measurement ($c_j$) is weighted with a complexity aversion parameter ($\alpha_K$).

5. The method according to any of claims 1 to 4, **characterized in that** the weighting factors ($w_j$) of each model ($M_j$) of the model ensemble (1) are calculated using the surface information criterion ($SIC_j$) of the model ($M_j$) from the formula

$$w_j = e^{-\frac{1}{2}SIC_j}.$$

6. The method according to any of claims 1 to 3, **characterized in that** for the model ensemble (1) the surface information criterion (SIC) is formed from an error matrix (**F**) that includes the model error ($E_j$) of the models ($M_j$) and a complexity measurement matrix (**C**) that includes the empirical complexity measurement ($c_j$) of the models ($M_j$), whereas the error matrix (**F**) and the complexity measurement matrix (**C**) according to the formula SIC = $\{\mathbf{w}^T\mathbf{F}\mathbf{w} + \mathbf{w}^T\mathbf{C}\mathbf{w}\}$ each being weighted twice using a weighting vector (**w**) that includes the weighting factors ($w_j$) of the models ($M_j$), and the surface information criterion (SIC) of the model ensemble (1) being minimized with respect to the weighting factors ($w_j$).

7. The method according to claim 6, **characterized in that** the error matrix (**F**) is calculated as a matrix product of a matrix (**E**), whereas the matrix (**E**) being calculated using the formula **E** = ($y(\mathbf{u}_i)$ - $\hat{y}_j(\mathbf{u}_i)$)).

8. The claim according to claim 6 or 7, **characterized in that** the complexity measurement matrix (**C**) is weighted using a complexity aversion parameter ($\alpha_K$).

9. The method according to claim 8, **characterized in that** the weighting factors ($w_j$) are calculated for different complexity aversion parameters ($\alpha_K$) and the weighting vector ($\mathbf{w}_{\alpha_K}$) belonging to a selected complexity aversion parameter ($\alpha_K$) is chosen as the optimum weighting vector ($\mathbf{w}_{opt}$) for the model ensemble (1).

10. The method according to claim 8, **characterized in that** weighting vectors ($\mathbf{w}_{\alpha_K}$) are calculated for different complexity aversion parameters ($\alpha_K$) and, in order to determine the optimum weighting vector ($\mathbf{w}_{opt}$), the relationship

$$\left\{\mathbf{w}_{\alpha_K}^T \mathbf{F}\mathbf{w}_{\alpha_K} + \frac{2}{N}\sigma^2\mathbf{w}_{\alpha_K}^T \mathbf{p}\right\}$$

is minimized with respect to the weighting vectors ($\mathbf{w}_{\alpha_K}$) calculated for the different complexity aversion parameters ($\alpha_K$).

## Revendications

1. Procédé d'estimation d'au moins une grandeur de sortie (y) d'un processus physique en fonction d'au moins une grandeur d'entrée (u), comportant un ensemble de modèles (1), l'ensemble de modèles (1) étant constitué d'une somme de chacune des grandeurs de sortie de modèle ($\hat{y}_j$) pondérées avec un facteur de pondération ($w_j$) d'une pluralité (j) de modèles ($M_j$), **caractérisé en ce que,** pour chaque modèle ($M_j$), une mesure de complexité ($c_j$) empirique,

laquelle évalue, sur une plage de grandeurs d'entrée (U) prédéterminée, l'écart de la grandeur de sortie de modèle $(\hat{y}_j)$ par rapport à la grandeur de sortie (y) du processus physique réel mesurée sur un banc d'essai pour le processus physique, ainsi qu'une erreur de modèle $(E_j)$ sont déterminées, et **en ce qu'**un critère d'information de surface $(SIC_j, SIC)$ est constitué à partir de la mesure de complexité $(c_j)$ empirique et de l'erreur de modèle $(E_j)$, critère à partir duquel les facteurs de pondération $(w_j)$ de l'ensemble de modèles (1) sont déterminés.

2. Procédé selon la revendication 1, **caractérisé en ce que** l'erreur quadratique moyenne $(MSE_j)$ entre les grandeurs de sortie (y) du processus physique mesurées à N grandeurs d'entrée (u) et les grandeurs de sortie de modèle calculées à ces N grandeurs d'entrée est utilisée comme erreur de modèle $(E_j)$ d'un modèle $(M_j)$ selon la relation

$$MSE_j = \frac{1}{N} \sum_{i=1}^{N} \left( y(\mathbf{u}_i) - \hat{y}_j(\mathbf{u}_i) \right)^2.$$

3. Procédé selon la revendication 1, **caractérisé en ce que** la mesure de complexité $(c_j)$ empirique d'un modèle $(M_j)$ répondant à la formule $c_j = \int_U \nabla\hat{y}_j(\mathbf{u})^T \nabla\hat{y}_j(\mathbf{u})d\mathbf{u}$ ou à la formule

$$c_j = \int_U \hat{y}_j(\mathbf{u})^T \hat{y}_j(\mathbf{u})d\mathbf{u} - \frac{1}{N}\sum_{i=1}^{N} \hat{y}_j(\mathbf{u}_i)^T \hat{y}_j(\mathbf{u}_i)$$

est calculée.

4. Procédé selon la revendication 1, **caractérisé en ce que** la mesure de complexité empirique $(c_j)$ est pondérée avec un paramètre d'aversion de complexité $(\alpha_K)$.

5. Procédé selon l'une des revendications 1 à 4, **caractérisé en ce que** les facteurs de pondération $(w_j)$ de chaque modèle $(M_j)$ de l'ensemble de modèles (1) sont calculés avec le critère d'information de surface $(SIC_j)$ du modèle $(M_j)$ de formule

$$w_j = e^{\frac{1}{2}SIC_j}.$$

6. Procédé selon l'une des revendications 1 à 3, **caractérisé en ce que,** pour l'ensemble de modèles (1), le critère d'information de surface (SIC) est constitué à partir d'une matrice d'erreur **(F)** qui contient les erreurs de modèle $(E_j)$ des modèles $(M_j)$, et d'une matrice de mesure de complexité **(C)** qui contient les mesures de complexité $(c_j)$ empiriques des modèles $(M_j)$, la matrice d'erreur **(F)** et la matrice de mesure de complexité **(C)** étant pondérées deux fois respectivement selon la formule SIC = $\{\mathbf{w}^T\mathbf{Fw} + \mathbf{w}^T\mathbf{Cw}\}$ par un vecteur de pondération (w) contenant les facteurs de pondération $(w_j)$ des modèles $(M_j)$, et **en ce que** le critère d'information de surface (SIC) de l'ensemble de modèles (1) est minimisé par rapport aux facteurs de pondération $(w_j)$.

7. Procédé selon la revendication 6, **caractérisé en ce que** la matrice d'erreur **(F)** est calculée en tant que produit de matrice d'une matrice **(E)**, la matrice **(E)** étant calculée à l'aide de la formule $\mathbf{E} = (y(\mathbf{u}_i) - \hat{y}_j(\mathbf{u}_i))$.

8. Procédé selon la revendication 6 ou 7, **caractérisé en ce que** la matrice de mesure de complexité **(C)** est pondérée par un paramètre d'aversion de complexité $(\alpha_K)$.

9. Procédé selon la revendication 8, **caractérisé en ce que** les facteurs de pondération $(w_j)$ peuvent être calculés pour différents paramètres d'aversion de complexité $(\alpha_K)$, et **en ce que**, à partir de ce calcul, le vecteur de pondération $(\mathbf{w}_{\alpha K})$ associé à un paramètre d'aversion de complexité sélectionné $(\alpha_K)$ est sélectionné comme vecteur de pondération $(\mathbf{w}_{opt})$ optimal pour l'ensemble de modèles (1).

10. Procédé selon la revendication 8, **caractérisé en ce que** des vecteurs de pondération $(\mathbf{w}_{\alpha K})$ sont calculés pour différents paramètres d'aversion de complexité $(\alpha_K)$, et **en ce que**, à partir de ce calcul, pour déterminer le vecteur de pondération $(\mathbf{w}_{opt})$ optimal, la relation $\left\{ \mathbf{w}_{\alpha_K}^T \mathbf{F} \mathbf{w}_{\alpha_K} + \frac{2}{N}\sigma^2 \mathbf{w}_{\alpha_K}^T \mathbf{p} \right\}$ par rapport aux vecteurs de pondération $(\mathbf{w}_{\alpha K})$ calculés pour les différents paramètres d'aversion de complexité $(\alpha_K)$ est minimisée.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013131836 A2

**In der Beschreibung aufgeführte Nicht-Patentliteratur**

- **SEQUENZ H.** Emission Modelling and Model-Based Optimisation of Engine Control. Technische Universität Darmstadt, Oktober 2012
- **HARTMANN B.** Lokale Modellnetze zur Identifikation und Versuchsplanung nichtlinearer Systeme. Universität Siegen, Januar 2014
- **HAMETNER C. et al.** Dynamic NOx emission modelling using local model networks. *Int. Journal of Engine Research,* 2014, vol. 15 (8), 928-933
- Nonlinear System Identification through Local Model Approaches: Partitioning Strategies and Parameter Estimation. **HAMETNER C. et al.** InTech. 10. August 2010, 179-194
- **AKAIKE, H.** Information theory and an extension of the maximum likelihood principle. *Proceedings 2nd International Symposium on Information Theory,* 1973, 267-281
- **HANSEN, B.E.** Least squares model averaging. *Econometrica,* 2007, vol. 75 (4), 1175-1189